# EUROPÄISCHE PATENTANMELDUNG

(11) **EP 0 629 491 A1**
(43) Veröffentlichungstag der Anmeldung: **21.12.1994**
(21) Anmeldenummer: 94109132.4
(22) Anmeldetag: 15.06.1994
(51) Int. Cl.: B29C 67/22, B29C 37/00

(54) **Verfahren und Vorrichtung zur Herstellung von mehrteiligen Formteilen aus expandierbarem Kunststoffgranulat und damit hergestellten Formteilen**

(30) Priorität: 21.06.1993 CH 858/93
(71) Anmelder: WANNERIT AG, CH-8865 Bilten (CH)
(72) Erfinder: Heinz, Roth, CH-8853 Lachen (CH)
(74) Vertreter: Lusuardi, Werther Giovanni, Dr.

(57) **Zusammenfassung**

Es wird ein Formteil (1), der aus einem Kern (2) und äusseren Teilen (3) aus expandierbarem Kunststoffgranulat herstellbar ist, sowie das Verfahren und die Vorrichtung zu seiner Herstellung, beschrieben. Bei dem Formteil (1) kann der Kern (2) nach allen Seiten von den äusseren Teilen (3) bedeckt werden, so dass der Kern (2) aus preiswertem Material mit weniger guten Eigenschaften herstellbar ist, die äusseren Teile (3) bessere Eigenschaften aufweisen. Der Formteil (1) lässt sich vorteilhaft mit einem Kern (2) aus preiswertem Recyklingmaterial und äusseren Teilen (3) aus teurerem neuem Material herstellen. Die Haltbarkeit der Verbindung der Teile (1, 2 und 3) ist, da sie durch "thermisches Schweissen" hergestellt ist, hervorragend. Das Herstellungsverfahren für den Formteil ist weniger zeitaufwendig als bei Verfahren nach dem Stand der Technik. Erfindungsgemässe Formteile können vorwiegend in der Bauwirtschaft oder als Teile von Verpackungen verwendet werden,

## Beschreibung

Die Erfindung betrifft ein Verfahren und eine Vorrichtung zur Herstellung von mehrteiligen Formteilen aus expandierbarem Kunststoffgranulat und damit hergestellte Formteile nach den Oberbegriffen der Patentansprüche 1, 7 und 14.

Bei einem expandierbaren Kunststoffgranulat sind die Körner aus festem Schaum, im folgenden als "porig" bezeichnet, und enthalten ein Treibmittel. So enthält expandierbares Polystyrol (EPS) als Treibmittel vorzugsweise den aliphatischen Kohlenwasserstoff Pentan. Formteile daraus werden durch Einfüllen des Granulats in einen Formkasten einer Formpresse und Erhitzen in diesem hergestellt. Die Temperatur des Granulats muss dabei über die Erweichungstemperatur des Polystyrols sowie über die Verdampfungstemperatur des an das Granulat gebundenen Treibmittels gebracht werden. Dabei dehnt sich das Granulat unter der Wirkung des Treibmittels gegen die Wände der Presse aus, die Körner werden aneinander gepresst und verkleben, und beim nachfolgenden Abkühlen sintert der Formteil in der Form des Formkastens und gewinnt dabei seine Festigkeit. Diese Formgebung des Formteils kann erfolgen, ohne dass von aussen der Deckel und/oder der Boden des Formkastens bewegt und damit ein äusserer Druck auf das Granulat ausgeübt wird.

EPS-Formteile können sich in ihren Materialeigenschaften unterscheiden, so in ihrer Dichte, Festigkeit, Elastizität und Bearbeitbarkeit. Weiter sind verschiedene Farbzusätze möglich. Das Granulat kann vor dem Einbringen in die Formpresse mit flammhemmenden Mitteln, beispielsweise mit Hexabromocyclododekan, behandelt werden. So sind Formteile bekannt geworden, die aus zwei oder mehreren Schichten hergestellt sind, welche aus verschieden vorbehandeltem und daher verschiedene Materialeigenschaften aufweisendem EPS bestehen. Diese sind meist durch Fügen, Verkleben oder thermischem Behandeln in Formpressen verbunden und zeigen oft eine gewisse Neigung, im Gebrauch an diesen Fügestellen zu brechen.

Seit einigen Jahren wird vermehrt bei der Fertigung von EPS-Formteilen auf Recykling-Material als Rohstoff zurückgegriffen. Die zurückgelieferten Formteile werden zerkleinert und zu Granulat gemahlen. Dies enthält in seinen Körnern viele mit Luft gefüllte Poren, jedoch kein Treibmittel mehr. Es wird in den Formkasten gefüllt und bis über den Erweichungspunkt des Polystyrols erwärmt. Um daraus einen Formteil zu machen, muss, da das Granulat ohne Treibmittel sich durch Erwärmen nicht merklich ausdehnt, der Deckel und/oder der Boden des Formkastens gegen das erwärmte Granulat gepresst werden, damit es verklebt und das immer noch aus Körnern mit luftgefüllten Poren bestehende Granulat in die Form des Formteils sintert, die es beim nachfolgenden Abkühlen beibehält. Solches Rezykling-Granulat wird im folgenden trotz des Fehlens von Treibmitteln ebenfalls als "expandierbares Kunststoffgranulat" bezeichnet.

Da gefärbte ESP-Formteile nicht nach Farbe gesammelt werden, findet man alle möglichen Farbanteile in Recykling-Formteilen. Ferner muss dort, wo Recykling-Formteile unter Brandschutz-Bedingungen verwendet werden, dem Granulat erneut flammhemmende Mittel zugegeben werden. Recykling-Granulat ist jedoch pro Gewichtseinheit zur Zeit etwa um die Hälfte billiger als neues Granulat, hat aber praktisch dieselben mechanischen Eigenschaften, so dass seine Anwendung sehr wirtschaftlich ist.

Eine Vorrichtung zur Herstellung eines Formteils aus mindestens zwei EPS-Materialien ist in der CH 668 033 A5 beschrieben. Bei ihr sind mindestens die Umfangswände und gegebenenfalls die Stirnwand des Formkastens unter Vergrösserung oder Verkleinerung des Kastenhohlraumes ein- bzw. ausfahrbar. Mit dieser Vorrichtung wird zunächst beispielsweise ein kleines Innenteil als Kern aus dem einen Material angefertigt, dann die Wände des Formkastens so nach aussen verstellt, dass auf dem Innenteil ein äusserer Teil aus einem anderen Material aufgesetzt werden kann. Es können im wesentlichen nur eben begrenzte Teile gefertigt werden, die nicht allseitig durch den äusseren Teil bedeckbar sind. Die Verbindung zwischen dem Kern und der äusseren Teil ist haltbar, das Herstellverfahren ist aber zeitraubend, da sowohl der Kern wie auch der äussere Teil im selben Formkasten hergestellt werden, dessen Aussenwände dazu noch verstellt werden müssen.

Der Erfindung liegt die Aufgabe zugrunde, ein aus einem inneren Teil, dem "Kern" und äusseren Teilen bestehender Formteil herzustellen, bei dem der Kern von äusseren Teilen völlig bedeckbar ist. Der Kern kann so aus preiswertem Recykling-Material hergestellt werden, ohne dass dies von aussen erkennbar ist. Dabei soll eine sehr haltbare Verbindung zwischen dem Kern und den äusseren Teilen herstellbar sein. Der Zeitaufwand für die Fertigung eines solchen zwei- oder mehrteiligen Formteils soll so klein wie möglich sein.

Die Erfindung wird durch die Kennzeichenteile der Patentansprüche
- 1 bezüglich des Verfahrens
- 7 bezüglich der Vorrichtung und
- 14 als Bedingungen für den Formteil selbst gelöst, die übrigen Ansprüche beschreiben vorteilhafte Ausführungsformen.

Die Erfindung wird an Hand der Zeichnung besprochen. Es wird dargestellt in
Fig. 1: Ein erfindungsgemässer Formteil, der aus Kern und äusserem Teil besteht und als Bauplatte verwendbar ist;
Fig. 2: Ein gleichartiger Formteil, der als Behälter verwendbar ist;
Fig. 3: Ein gleichartiger Formteil, der als Verpackungsmaterial oder als Stützteil verwendbar ist;
Fig. 4: Eine Doppelpresse als Vorrichtung zur rationalen Herstellung von erfindungsgemässen Formteilen;
Fig. 5: Eine Schemazeichnung der zweiten Presse nach Fig. 4 mit in den offenen Formkasten einlaufendem Kern;
Fig. 6: Die Presse aus Fig. 5 mit dem im offenen Formkasten auf Stützen liegenden Platte liegendem Kern;
Fig. 7: Die Presse aus Fig. 6 mit geschlossenem Formkasten;
Fig. 8: Die Presse aus Fig. 7, der Kern liegt auf der Platte, es ist Granulat für den Oberteil des äusseren Teils eingefüllt;
Fig. 9: Die Presse aus Fig. 8, die Platte ist abgesenkt, der Rest des Granulats für den äusseren Teil ist eingefüllt; und
Fig. 10: Die Presse aus Fig. 9 nach einer Temperatureinwirkung, der fertige Formteil wird entfernt.

In der Zeichnung sind gleichartige Teile, die mehrmals vorkommen, mit demselben Bezugszeichen und zusätzlich mit einem durch einen Punkt abgetrennten Unterbezugszeichen gekennzeichnet, das bei gleichartigem Vorkommen über verschiedene Figuren gleichbleibt. Werden im Text Unterbezugszeichen aus verschiedenen Vorkommen erwähnt, so werden grosse Buchstaben verwendet.

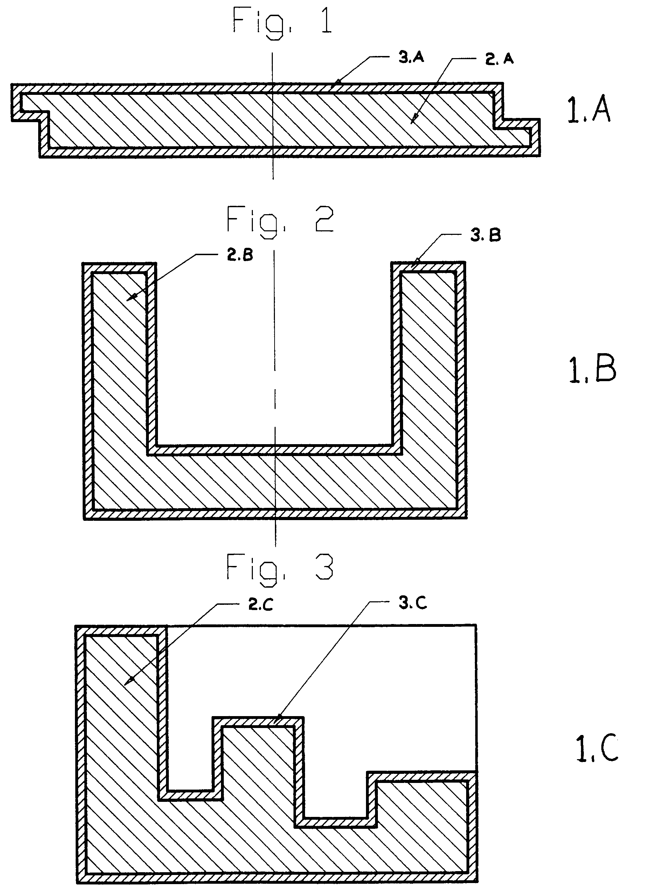

Die in der Fig. 1 bis 3 dargestellten Formteile 1 aus expandierbarem Kunststoff, die als Bauplatte 1.A (Fig. 1), als Behälter 1.B (Fig. 2) oder als Verpackungsteil oder Stützteil 1.C (Fig. 3) verwendbar sind, bestehen jeweils aus einem Kern 2.I und aus einem äusseren Teil 3.I. Bei den hier dargestellten Formteilen 1 ist jeweils der Kern 2 vollständig von äusseren Teilen 3 umschlossen, dies ist aber keine notwendige Bedingung für erfindungsgemässe Formteile 1. Es können auch mehrere äussere Teile 3.i vorhanden sein. Der Kern 2 und die äusseren Teile 3 sind durch das noch zu beschreibende Herstellungsverfahren äusserst haltbar verbunden.

Der Kern 2 kann beispielsweise aus preiswertem und nicht so ansehnlichen Recyklingmaterial hergestellt werden, wobei eine vollständige Umschliessung des Kernes 2 mit aus Neumaterial bestehenden äusseren Teilen 3 den optischen Eindruck des Formteils 1 verbessert. Weiter können für äusseren Teile 3 solche mit besseren Materialeigenschaften, wie höherer Dichte, grössere Festigkeit oder bessere Bearbeitbarkeit verwendet werden, wodurch das Formteil 1, obwohl mit einem grossem Anteil an Material mit niederem Preis hergestellt, höheren Anforderungen genügt.

Solche Formteile 1 werden beispielsweise aus Granulat aus Expandierbarem Polystyrol hergestellt, wobei als Treibmittel etwa ein aliphatischer Stoff, beispielsweise Pentan, verwendbar ist. Sie können aber auch aus Polyurethan oder einem anderen Kunststoff bestehen, dem ein Treibmittel zugesetzt ist. Das verwendete Granulat kann, bevor aus ihm ein Formteil 1 hergestellt wird, mit einem Flammhemmittel, beispielsweise mit Hexabromocyklododecan, etwa in einem Trommelmischer, behandelt werden.

Die so beschriebenen Formteile 1 sind an sich noch nicht erfindungsgemäss, wenn sie nicht mit einer im folgenden beschriebenen Vorrichtung und nach der im folgenden beschriebenen Verfahren hergestellt sind.

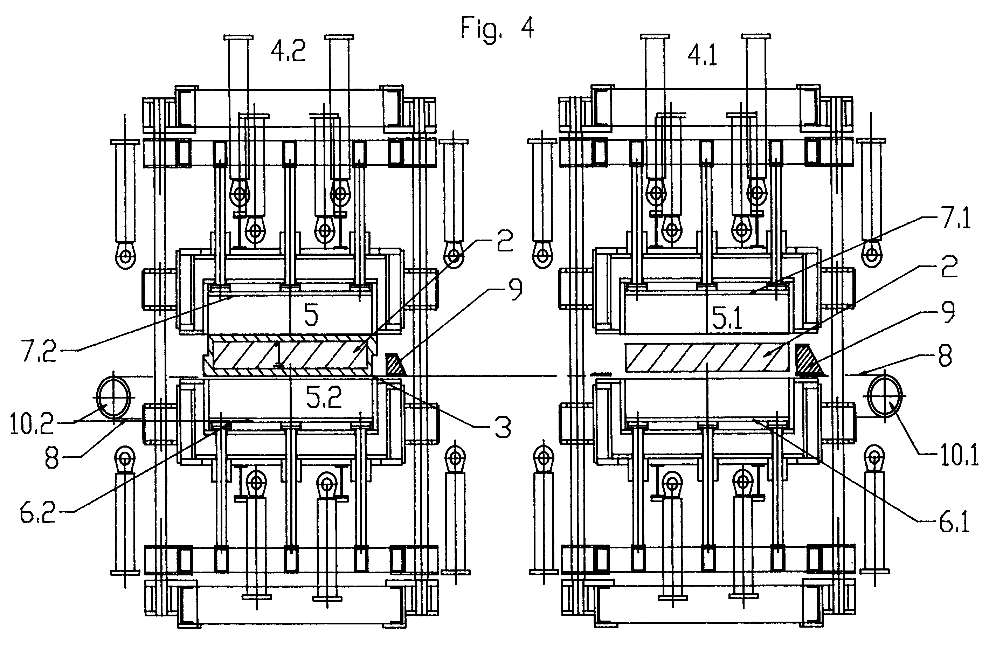

Eine Vorrichtung für die Herstellung von erfindungsgemässen Formteilen wird in der Fig. 4 dargestellt. Eine solche Vorrichtung besteht grundsätzlich aus mehreren Formpressen 4 zur Herstellung von Formteilen aus einem ein Treibmittel enthaltendes Kunststoffgranulat, wobei die in der Figur 4 gezeichnete Vorrichtung zwei solche Formpressen 4.1 und 4.2 aufweist. Jede dieser Formpressen 4 besitzt einen Formkasten 5, der jeweils aus einem Boden 6 und einem Deckel 7 besteht. Diese sind so gestaltet, dass zwischen ihnen ein aus Granulat bestehender Teil 1 oder 2 formbar ist. Der Deckel 7 und der Boden 6 sind in der Vertikalen verschiebbar angeordnet, so dass die Formkästen 5 öffenbar und schliessbar sind und, wenn notwendig, gegen das Granulat ein Druck ausübbar ist.

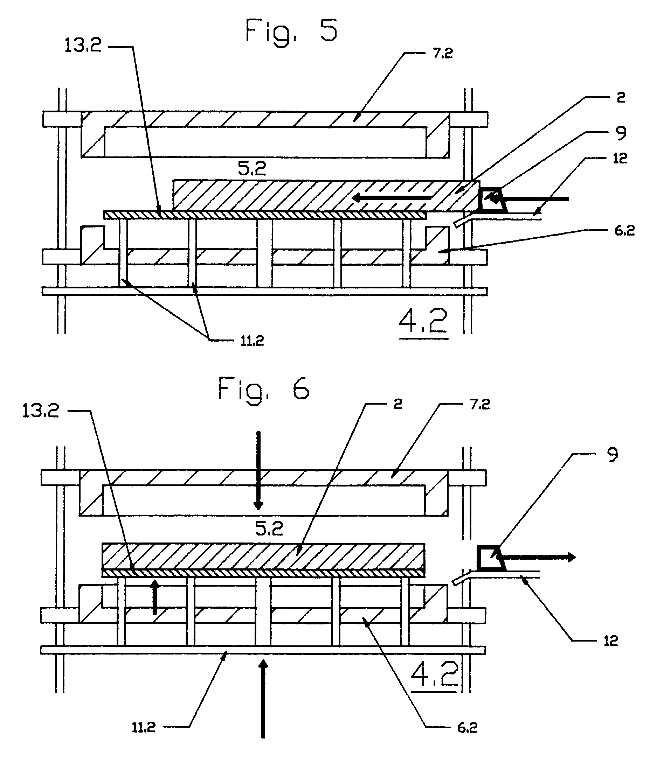

In jeden Formkasten 5 mündet jeweils mindestens eine - in der Fig. 4 (auch in Figuren 5 bis 10) nicht gezeichnete - Zuleitung für Granulat, das zum Beispiel durch Pressluft in den Formkasten 5 gefördert wird. Jeder Formkasten 5 ist auf Temperaturen über der Erweichungstemperatur des Granulates bringbar, so dass das eingebrachte Granulat verklebbar wird und sich unter Wirkung des sich ausdehnenden, im ihm enthaltenen Treibmittels oder durch Druck auf den Deckel 7 und/oder den Boden 6 des Formkastens 5 in die durch die innere Gestaltung der Formkästen 5 gegebene Form gepresst wird, und so die Form des betreffenden Teiles 1 oder 2 erhält.

Die Formkästen 5.i sind in Herstellungsrichtung des Formteils 1 dicht nebeneinander angeordnet, da in Ihnen nacheinander die Teile 2, 2+3.2, bis 2+3.n und 1 geformt werden. Dazu ist beispielsweise beim ersten Formkasten 5.1 in Herstellrichtung des Formteils 1 der Boden 6.1 und der Deckel 7.1 innen so gestaltet, dass der Kern 2 des Formteils herstellbar ist. Beim letzten Formkasten 5.n in Herstellrichtung des Formteils 1 ist der Boden 6.n und der Deckel 7.n innen so gestaltet, dass der fertige Formteil 1 herstellbar ist. Bei eventuell dazwischen liegenden Formkästen 5.i ist der Boden 6.i und der Deckel 7.i innen so gestaltet, das ein entsprechender äusserer Teil 3.i zum Kern 2 und den vorhandenen äusseren Teilen 3.2 bis 3.i-1 gefügt werden kann.

Will man verschieden gestaltete Formteile 1 auf derselben Vorrichtung herstellen, müssen beispielsweise die Böden 6.i und die Deckel 7.i innen durch in der Fig. 4 nicht gezeichnete Zusatzteile umbaubar sein.

In der Vorrichtung ist ferner eine Transporteinrichtung 8 vorhanden, die den Kern 2 und die äusseren Teile 3.i, die mit ihm bereits verbunden sind, schrittweise durch die Reihe der Formkästen 5.i führt, wobei jeweils der Kern 2 in einer Lage festgehalten wird, die seiner Lage in dem fertigen Formteil 1 entspricht. Der Transport wird in horizontaler Richtung beispielsweise von mit der Transporteinrichtung 8 verbundenen Nocken 9 bewirkt, die an dem aus dem Kern 2 - oder dem Kern 2 und den bereits mit ihm verbundenen äusseren Teilen 3.i - entstehenden Formteil 1 angreifen.

Die Transporteinrichtung 8 kann beispielsweise mindestens zwei Ketten aufweisen, die über je zwei Umlenkrollen 10.1 und 10.2 geführt und schrittgesteuert sind. Sie kann aber auch mindestens zwei Stahlbänder oder gelochte Stahlbänder, die über Umlenkrollen 10.1 und 10.2 geführt sind, besitzen. Die Ketten oder Stahlbänder laufen seitlich an den Formkasten 5 vorbei. Ausserhalb der Formkästen 5 werden die Teile 1, 2 und 3 auf tischartigen Teilen 12 der Formpresse 4 geführt

In den Formkästen 5 sind ferner eine Platte 13 tragende versenkbare Stützen 11 - nur in den Figuren 5 bis 10 gezeichnet - angeordnet. Auf diesen Stützen 11 ist der in den jeweiligen Formkasten gebrachte Kern 2 - gegebenenfalls mit den mit ihm verbundenen äusseren Teilen 3.i - so ablegbar, wie es die Lage des Kerns 2 im späteren Formteil 1 erfordert.

An den Formkästen 5 sind ferner nicht gezeichnete Druckmessgeräte angebracht sind, welche den Druck des in den Formkasten 5 eingebrachten Granulats gegen die Innenseiten des Formkastens 5 messen und Temperaturmessgeräte, welche die Temperatur im Formkasten 5 messen.

Das Verfahren zum Anfertigen erfindungsgemässer Formteile 1 mit Hilfe einer Anlage nach Fig. 4 wird im folgenden dargestellt. Hier wird es beispielhaft an Hand der Herstellung eines zweiteiligen Formteils 1 aus einem Kern 2 und einem äusseren Teil 3 mit Hilfe der ersten Formpresse 4.1 und der zweiten Formpresse 4.2. gezeigt Wir betrachten dabei nur die Vorgänge, nachdem bereits der Kern 2 des herzustellenden Formteils 1 in der ersten Formpresse 4.1 hergestellt worden ist. Dazu wurde das für ihn benötigte Granulat mit den gewünschten Eigenschaften in den Formkasten 5.1 der ersten Formpresse 4.1 eingefüllt und darin die Formung durch Einwirkung höherer Temperaturen in der dem Stand der Technik entsprechenden Weise durchgeführt. Diese höhere Temperatur liegt über der Erweichungstemperatur des Granulates und gegebenenfalls über der Verdampfungstemperatur des an das Granulat gebundenen Treibmittels. Der Kern 2 ist also bereits fertiggestellt, wenn die weiteren Vorgänge mit Hilfe der Figuren 5 bis 10 betrachtet werden. Es werden dabei die Bezugszeichen der Abb. 4 benutzt, auch wenn die damit gekennzeichneten Teile in den Beschreibungen der Figuren 5 bis 10 nicht genannt werden.

Besteht der Formteil 1 aus einem Kern 2 und mehreren äusseren Teilen 3, so geschieht die Herstellung mit mehreren Formpressen 4.i, die aber jeweils nur die hier für die Formpresse 4.2 ablaufenden Vorgänge wiederholen, bis der fertige Formteil 1 in Gänze in der letzten Formpresse 4.n hergestellt ist. Die Patentansprüche sind für diesen allgemeineren Fall abgefasst.

Die Fig. 5 zeigt, wie der fertige Kern 2 in den Formkasten 5.2 der zweiten Presse 4.2 überführt wird. Der Kern 2 wird dazu von der Nocke 9 geschoben, innerhalb des dabei offenen Formkastens 5.2 wird er dabei auf der Platte 13.2 geführt, die auf den nicht ganz ausgefahrenen Stützen 11.2 steht.

Die Fig. 6 zeigt, dass, sobald der Kern 2 in der richtige Lage innerhalb des Formkastens 5.2 auf der Platte 13.2 liegt, die Stützen 11.2 weiter ausgefahren werden, so dass der Kern 2 auf der Platte 13.2 in der Senkrechten in die spätere Lage des Kerns 2 im Formteil 1 gebracht wird. Der Nocken 9 wird aus dem Formkasten 5.2 herausgefahren, der Formkasten 5.2 beginnt sich durch eine Aufwärtsbewegung des Bodens 6.2 und eine Abwärtsbewegung des Deckels 7.2 zu schliessen.

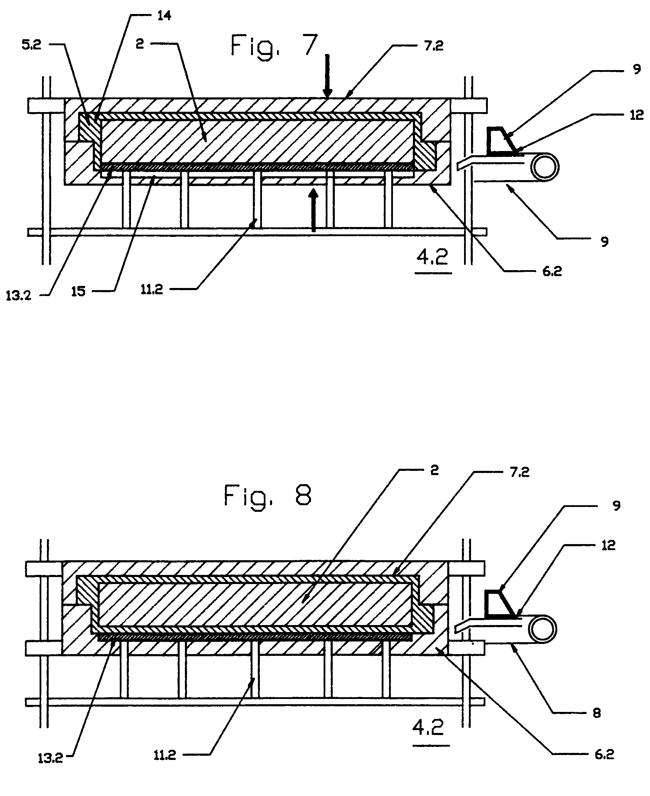

In der Fig. 7 ist der Formkasten 5.2 geschlossen, wobei zunächst ein freier Raum, bestehend aus Oberteil 14 und Unterteil 15 um den Kern 2 entsteht, der zunächst auf der Platte 13.2 liegt.

Der Oberteil 14 des freien Raumes wird durch eine in den Formkasten 4.2 mündende, nicht gezeichnete Zuleitung mit für den äusseren Teil 3 vorgesehenen Granulat, das beispielsweise mit Pressluft gefördert wird, aufgefüllt, was in der Fig. 8 gezeigt ist. Dabei zeigen nicht gezeichnete Druckmesseinrichtungen am Formkasten 4.2 an, wenn eine vollständige Füllung des Oberteils 14 des ursprünglich freien Raumes erreicht ist und unterbrechen die Füllung. Der Unterteil 15 des freien Raumes, in dem die Platte 13.2 von den Stützen 11.2 getragen wird, bleibt zunächst granulatfrei.

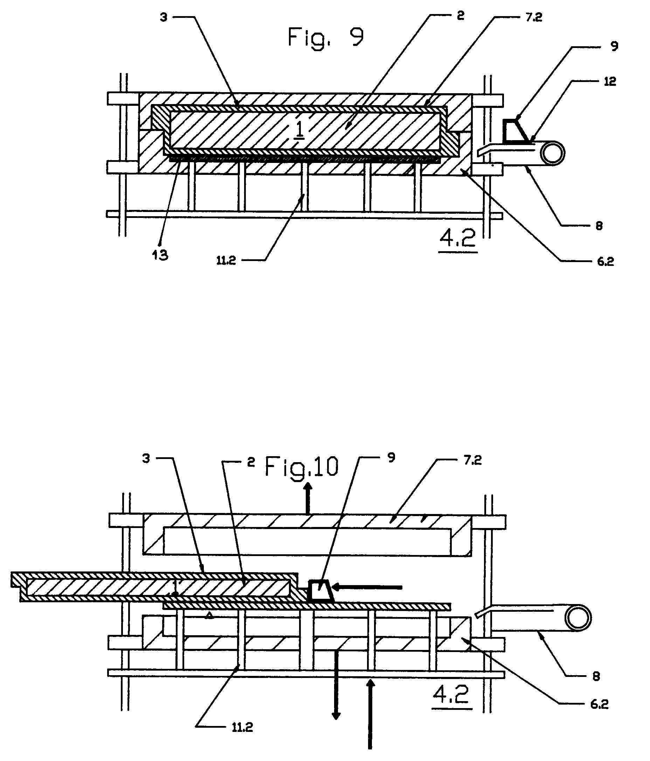

In der Fig. 9 ist der Kern 2 an dem in der Fig. 8 eingenommenen Platz verblieben. Die Platte 13.2 ist jedoch durch die Stützen 11.2 so weit abgesenkt worden, dass sie auf dem Boden 6.2 des zweiten Formkastens 5.2 liegt. Der Unterteil 15 des freien Raums wird nun durch einen weiteren Granulatstoss durch die nicht gezeichnete Zuleitung gefüllt, wobei auch diese weitere Füllung durch die Druckmesseinrichtungen überwacht wird. Der fertig gefüllte Zustand ist in der Fig. 9 wiedergegeben.

Der nun granulatgefüllte Raum, der bis auf die bewegliche Platte 13 vorher dem freien Raum 14, 15 entsprach, besitzt dieselbe Aussenform wie sie der fertige Formteil 1 hat, so dass das

Formteil 1 hergestellbar ist. Werden mehr als zwei Formpressen 4 zur Anfertigung des Formteils 1 benutzt, so entspricht der granulatgefüllte Raum im geschlossenen Formkasten 5.i der Form des Kerns 2 mit den angefügten äusseren Teilen 3.2 bis 3.i, so dass ein Vorprodukt des Formteils 1 hergestellbar ist.

Nun wird das Innere des Formkastens 5.2 auf die höhere Temperatur gebracht, die über der Erweichungstemperatur des Granulats und gegebenenfalls der Verdampfungstemperatur des an das Granulat gebundenen Treibmittels liegt. Diese Temperatur wird durch nicht gezeichnete Temperaturmessgeräte überwacht. Das neu eingefüllte Granulat verklebt sich, wird durch druckhafte Ausdehnung des Treibmittels und nötigenfalls durch Bewegung des Bodens 6.2 und/oder des Deckels 7.2 verdichtet, sintert beim darauffolgenden Abkühlen in der Form des äusseren Teils 3 und wird so thermisch mit dem Kern 2 verschweisst. Der Formkörper 1 ist damit gebildet. Mit diesem Verfahren wird eine hochfeste mechanische Verbindung zwischen dem Kern 2 und den äusseren Teilen 3 bewirkt.

Während der bei der Besprechung der Figuren 7 bis 9 ablaufenden Vorgänge kann ein neuer Kern 2 in der ersten Formpresse 4.1 gefertigt werden.

Der fertige Formteil 1 wird in der Fig. 10 aus der zweiten Formpresse 4.2. herausgeführt. Gleichzeitig wird der neuer Kern 2 von der ersten Formpresse 4.1 in die zweite Formpresse 4.2 überführt. Bei dem erfindungsgemässen Formteil 1, der aus einem Kern 2 und äusseren Teilen 3.i nach dem beschriebenen Verfahren und mit den beschriebenen Anlagen hergestellt ist, kann der Kern 2 von äusseren Teilen 3.i völlig überdeckbar gestaltet sein. Der Formteil 1 kann einen Kern 2 aus preisgünstigem Rezyklingmaterial besitzen, ohne dass dies von aussen bemerkbar ist, oder die äusseren Teile 3.i können mit Granulat mit besseren Eigenschaften gefertigt werden. Der Formteil 1 ist so preiswerter herstellbar als nach dem Stand der Technik hergestellbare Formteile 1. Es besteht eine hochfeste Verbindung zwischen dem Kern 2 und den äusseren Teilen 3.i. Der Zeitaufwand für die Fertigung eines solchen mehrteiligen Formteils 1 ist deutlich kleiner als die nach dem Stand der Technik hergestellten Formteile 1.

## Patentansprüche

1. Verfahren zum Anfertigen eines Formteils (1) aus expandierbarem Kunststoffgranulat, wobei der Formteil (1) aus mindestens zwei Teilen (2, 3) besteht, das Granulat im Formkasten (5) von Formpressen (4) eingefüllt wird, worin die Formung durch Einwirkung einer höheren Temperatur als der Erweichungstemperatur des Granulats entweder durch druckhaftes Ausdehnen eines im Granulat enthaltenen Treibmittels oder durch Einwirkung eines äusseren Druckes geschieht, wobei eine hochbeständige mechanische Verbindung der Teile (2, 3) herstellbar ist,
dadurch gekennzeichnet, dass
- zur Formung eines im folgenden als Kern (2) bezeichneten inneren Teils eine erste Formpresse (4.1) in bekannter Weise dient,
- der fertige Kern (2), mit den schon mit ihm verbundenen äusseren Teilen (3), nacheinander so durch Formkästen (5.i) von weiteren Formpressen (4.i) geführt wird, dass in den Formkästen (5.i) der Kern (2) in seiner späteren Lage im Formteil (1) innerhalb eines zunächst freien Raums gebracht wird, welcher die Form des Kerns (2) mit den zugefügten und den zuzufügenden äusseren Teilen (3.2 bis 3.i) besitzt,
- der freie Raum mit Granulat für den äusseren Teil (3.i) völlig gefüllt wird,
- der weitere Formkasten (5.i) auf die zur Formung des Formteils (1) notwendige höhere Temperatur gebracht und durch Druck gegen die Innenwände des Formkastens (5.i) der äussere Teil (3.i) geformt und dann abgekühlt wird,
- während der Dauer des gleichzeitigen Füllens und Haltens auf hoher Temperatur der weiteren Formpressen (4.2 bis 4.i) in der ersten Formpresse (4.1) ein neuer Kern (2) herstellbar ist,
- in der letzten Formpresse (4.n) in dieser Weise der fertige Formteil (1) hergestellt wird und
- der fertige Formteil (1) aus der letzten Formpresse (4.2) herausgeführt wird und die Kerne (2) mit angefügten äusseren Teilen (3.i) jeweils in die nächste Formpresse (4.i+1) überführt werden.

2. Verfahren nach Anspruch 1, dadurch gekennzeichnet, dass die Füllung der Formkästen (5) der Formpressen (4) mit Granulat durch Pressluft erfolgt.

3. Verfahren nach Anspruch 1, dadurch gekennzeichnet, dass die vollständige Füllung der Formkästen (5.i) mit Granulat durch Druckmessstellen in den Formkästen (5.i) überwacht wird.

4. Verfahren nach Anspruch 1, dadurch gekennzeichnet, dass die höhere Temperatur, auf welche die Formkästen (5.i) gebracht werden, über der Erweichungstemperatur des Granulats und der Verdampfungstemperatur des an das Granulat gebundenen Treibmittels liegt.

5. Verfahren nach Anspruch 4, dadurch gekennzeichnet, dass die Temperatur in den Formkästen (5.i) durch Temperaturmessgeräte überwacht wird.

6. Verfahren nach Anspruch 4, dadurch gekennzeichnet, dass die Erhitzung der Formkästen (5.1) auf die höhere Temperatur durch Dampf geschieht.

7. Vorrichtung zur Herstellung von Formteilen (1) aus einem ein Treibmittel enthaltendes Kunststoffgranulat, die aus Formpressen (4) mit Formkästen (5) besteht, die jeweils einen Boden (6) und einen Deckel (7) besitzen, die so gestaltet sind, dass zwischen ihnen ein aus Granulat bestehender Teil (1, 2 oder 3) formbar ist, wobei jeweils der Deckel (7) gegen den Boden (7) in der Vertikalen verschiebbar angeordnet ist, so dass die Formkästen (5) öffenbar und schliessbar sind, dass jeweils mindestens eine Zuleitung für Granulat in die Formkästen (5) mündet, dass die geschlossenen Formkästen (5) auf höhere Temperaturen bringbar sind, so dass das eingebrachte Granulat sich unter Wirkung des sich ausdehnenden, im ihm enthaltenen Treibmittels oder durch äusseren Druck in die durch die innere Gestaltung der Formkästen (5) gegebene Form gepresst wird, und so die Form des betreffenden Teiles (1, 2 oder 3) erhält,
dadurch gekennzeichnet,
- dass die Formkästen (5) in Durchlaufrichtung des herzustellenden Formteils (1) dicht nebeneinander angeordnet sind,
- dass in dem ersten Formkasten (5.1) in Herstellrichtung des Formteils (1) der Boden (6) und der Deckel (7) innen so gestaltbar sind, dass der Kern (2) des Formteils (1) formbar ist,
- dass in dem letzten Formkasten (5.n) in Herstellrichtung des Formteils (1) der Boden (6) und der Deckel (7) innen so gestaltbar sind, dass der Formteil (1) formbar ist,
- dass in zwischenliegenden Formkästen (5.i) der Boden (6) und der Deckel (7) innen so gestaltbar ist, das ein entsprechend geformter äusserer Teil (3.i) zum Kern (2) und den vorhandenen äusseren Teilen (3.2 bis 3.i-1) gefügt werden kann und
- dass eine Transporteinrichtung (8) den Kern (2) und die äusseren Teile (3), die mit ihm bereits verbunden sind, schrittweise in der Herstellrichtung durch die Reihe der Formkästen (5) führt, wobei jeweils der Kern (2) in einer Lage festgehalten wird, die seiner Lage in dem fertigen Formteil (1) entspricht.

8. Vorrichtung nach Anspruch 7, dadurch gekennzeichnet, dass durch die Transporteinrichtung (8) mittels Nocken (9) der aus dem Kern (2) und den bereits mit ihm verbundenen äusseren Teilen (3) entstehenden Formteil (1) in der Herstellungsrichtung des Formteils (1) verschiebbar ist.

9. Vorrichtung nach Anspruch 7, dadurch gekennzeichnet, dass die Transporteinrichtung (8) mindestens zwei Ketten, die über je zwei Umlenkrollen (10) geführt und schrittgesteuert sind, besitzt.

10. Vorrichtung nach Anspruch 7, dadurch gekennzeichnet, dass die Transporteinrichtung (8) mindestens zwei Stahlbänder oder gelochte Stahlbänder, die über je zwei Umlenkrollen (10) geführt und schrittgesteuert sind, besitzt.

11. Vorrichtung nach Anspruch 7, dadurch gekennzeichnet, dass in den Formkästen (5) versenkbare Stützen (11), die eine Platte (13) tragen, angeordnet sind, auf die der in den jeweiligen Formkasten (5) gebrachte Kern (2) - gegebenenfalls mit den mit ihm verbundenen äusseren Teilen (3) - so ablegbar ist, wie es die Lage des Kerns (2)im späteren Formteil (1) erfordert, diese Stützen (11) mit der Platte (13) aus dem Inneren des Formkastens (5) zurückziehbar sind, wenn der in diesen Formkasten (5) eingebrachte Kern (2) mit den mit ihm verbundenen äusseren Teilen (3) durch das unter Druck eingefüllte Granulat in dieser Lage festgehalten ist und der durch die Stützen (11) und die Platte (13) frei gewordene, nun leere Raum durch einen zusätzlichen, mit Pressluft in den Formkasten (5) geführter Granulatstoss aufgefüllt wird.

12. Vorrichtung nach Anspruch 7, dadurch gekennzeichnet, dass an den Formkästen (5) Druckmessgeräte angebracht sind, welche den Druck im Formkasten messen.

13. Vorrichtung nach Anspruch 7, dadurch gekennzeichnet, dass an den Formkästen (5) Temperaturmessgeräte angebracht sind, welche die Temperatur im Formkasten messen.

14. Formteil aus einem expandierbaren Kunststoffgranulat, bestehend aus einem Kern (2) und äusseren Teilen (3), dadurch gekennzeichnet, dass er mit dem Verfahren nach mindestens dem Anspruch 1 und einer Vorrichtung nach mindestens dem Anspruch 7 hergestellt ist.

15. Formteil nach Anspruch 14, dadurch gekennzeichnet, dass die äusseren Teile (3) den Kern (2) allseitig lückenlos umschliessen.

16. Formteil nach Anspruch 14 oder 15, dadurch gekennzeichnet, dass das Granulat aus Polystyrol besteht.

17. Formteil nach Anspruch 16, dadurch gekennzeichnet, dass als Treibmittel eine aliphatische Verbindung, beispielsweise Pentan, verwendet wird.

18. Formteil nach Anspruch 14, dadurch gekennzeichnet, dass das Kunststoffgranulat aus Polyurethan besteht, dem ein Treibmittel zugesetzt ist.

19. Formteil nach Anspruch 14, dadurch gekennzeichnet, dass die äusseren Teile (3) bessere Materialeigenschaften, wie höhere Festigkeit, grössere Dichte, bessere Bearbeitbarkeit, gleichmässige Färbung, besitzen.

20. Formteil nach Anspruch 14, dadurch gekennzeichnet, dass der Kern (2) aus Recyklingmaterial besteht.

21. Formteil nach Anspruch 14, dadurch gekennzeichnet, dass das verwendete Granulat mit einem Flammhemmittel, beispielsweise mit Hexabromocyklododecan behandelt wurde.
